# EUROPEAN PATENT SPECIFICATION

(11) **EP 3 972 703 B1**
(45) Date of publication and mention of the grant of the patent: **05.06.2024**
(21) Application number: 20809554.7
(22) Date of filing: 13.04.2020
(51) Int. Cl.: A62C 35/68, F16B 2/02, F16L 3/10, F16L 3/16

(54) **SPRINKLER BRACKET WITH CLAMP LOCK**
SPRINKLERBÜGEL MIT KLEMMVERSCHLUSS
SUPPORT D'EXTINCTEUR À VERROU DE SERRAGE

(30) Priority: 21.05.2019 TR 201907668
(43) Date of publication of application: 30.03.2022
(73) Proprietor: Haci Ayvaz Endüstriyel Mamüller Sanayi ve Ticaret Anonim Sirketi, Beyoglu/Istanbul (TR)
(72) Inventor: AYVAZ, Ohannes, Istanbul (TR)
(74) Representative: Yamankaradeniz, Kemal
(86) International application number: PCT/TR2020/050309
(87) International publication number: WO 2020/236105

(56) References cited:
- WO-A1-2014/046746
- WO-A1-2020/236108
- US-A- 5 622 341
- US-A1- 2011 284 098
- US-A1- 2018 259 094
- US-A1- 2018 259 094

## Description

### Technical Field

The invention is related to the sprinkler systems which are used in fire extinguishing by spraying water after the fire in indoor and/or outdoor areas is detected.

The invention is particularly related to a sprinkler bracket which provides the sprinkler sleeve to be easily located and fixed between two clamps namely the lower clamp and the corresponding upper clamp which have collapsible feature.

### State of the Art

Today sprinkler systems which provide fire extinguishing by spraying water after the fire in indoor and/or outdoor areas is detected are used. These systems are positioned on a suspended ceiling and formed by hanging the sprinkler part from the ceiling. In case of a fire, the system is activated and pumps water to the sprinklers and the water compressed to the system established with pipes advances to towards the sprinkler. In this manner, it sprays the water within the environment.

The sprinkler sleeve (bracket) which fixes the sprinkler head in the prior art is fixed to the profile. For this fixation process, the sleeve is inserted to the profile from the top portion. This leads to extend the process time.

In the state of the art, in case the sprinkler is required to be demounted, it shall be removed from the top and thus this increases the assembly labour in narrow ceiling structures.

Dual-clamp systems are developed in which the sprinkler sleeve can be placed from the side portion instead of inserting thereof from the top portion. The sprinkler sleeve is placed and compressed between these two clamps in these systems.

In said system with clamp in the state of the art, it is not sufficient to clamp the two clamps together and the clamps can be influenced from the environmental conditions and can get loose. This leads to the sleeve's leaning down.

The portions compressing the sleeve in the method with clamp in the state of the art are insufficient to keep thereof in a stable manner. This leads to slipping of the sleeve during water spraying and prevents performing an efficient fire extinguishing.

In the patent research made regarding the prior art, file No US20160279455A1 is encountered. In this application, the sprinkler sleeve is fixed to the profile with an integral apparatus. Therefore, this application can be referred as an example to the problems arising out of the insertion of the sleeve from the top.

As a result of the researches made in the literature, various structures are encountered regarding said sprinkler system. One of them is the utility model with application No TR2007/05025. In the summary of the invention with classification category A62C 37/08, it is stated that; "Our invention is related to a sprinkler hose system used in the indoor fire extinguishing installations having the duty of extinguishing the possible fires that may happen indoor areas, characterized by comprising; the metal end of the flexible hose which is connected to the main pipe via a main pipe connection end is fixed to the movable sliding part. The metal end and the sprinkling end is fully fitted in the hole opened in the ceiling by means of positioning the movable sliding part on the hole opened in the celling by means of moving on the motion axis plate and thus hole openings are eliminated on the ceiling. Also, in these systems, since the movable sliding part uses motion axis plate and flexible hose, it is provided that during building quake or earthquake, the fire extinguishing system is left switched on and it absorbs the vibration created. The system consists of; main pipe, main pipe connection end, flexible hose, metal end, movable sliding part, motion axis plate, plate fixation part, ceiling fastening part and sprinkling end".

Another example regarding said structure is the patent with application No TR2018/13638. In the summary of the invention with classification category F16L 11/12. The following statement is included; "the sleeve can have a colour area, colour patterns with contrast, symbols, distinctive signs or combination of these elements and can be used to show the features of the sprinkler assembly in a visible manner."

In another example of said structure is the utility model with application No TR2018/09018. In the summary of the invention with classification category A62C 35/00, the following statement takes place" The invention is related to a fire extinguishing sprinkler badge which is used in house, office, store, shopping center, school, hospital, car parking area, warehouse, factory and similar indoor places by means of being positioned on the ceiling or the wall and is used for closing and adjusting the gaps on the ceiling and walls during the sprinkler assembly which performs the functions of fire extinguishing and controlling the fire, is appropriate to any kind of sprinklers, is heat resistant and durable."

US20110284098A1 discloses a hub assembly for supporting a portion of a flexible sprinkler assemblage within a ceiling, the hub assembly including a primary support mounted to a ceiling support member, and a secondary support member rotatable relative to a primary support member between an open position and a closed position. In the closed position, portions of the supports are overlapping and cut outs formed in the primary support cooperate together with cut outs formed in the secondary support to define a hub opening configured to receive the portion of the flexible sprinkler assemblage. The hub assembly also includes a locking mechanism configured to selectively connect the primary support to the secondary support, and an adjustment mechanism disposed on the primary support that is configured to secure the position of the portion of the flexible sprinkler assemblage within the hub opening, and is separate from the locking mechanism.

WO2014046746A1 discloses a support system for a fire protection sprinkler includes a support bar having a pair of end brackets disposed at the ends of the support bar. A center bracket assembly is mounted on the support bar and includes a support bracket and a hinge bracket pivotally connected to the support bracket by a hinge pin. The pair of end bracket assemblies each include an outside bracket and an inside bracket secured to the outside bracket wherein at least one of the outside and the inside bracket has an upper end connected to the support bar and includes an angled body extending laterally outward from the upper end away from the center bracket wherein the outside and inside brackets define a channel therebetween for receiving an upper rail of a T-shaped rail of a drop ceiling system.

US20180259094A1 discloses a bracket for fixing a reducer in a fire sprinkler, the bracket including: a main body part provided with a cutaway seat for allowing the reducer to be seated therein; and a coupling part openably coupled with the main body part, formed with a groove at a side thereof to lock the reducer seated in the cutaway seat of the main body part, and configured to lock and release the reducer seated in the cutaway seat of the main body part by being opened and closed, wherein an edge of the cutaway seat of the main body part is provided with a main body part wing to increase a contact area with the reducer seated in the cutaway seat, and an edge of the groove of the coupling part is provided with a coupling part wing to increase the contact area with the reducer.

The sprinkler sleeve is fixed to the profile with an integral apparatus in the abovementioned applications. Therefore, these applications can referred as examples to some disadvantages mentioned above.

As a result, parallel to the developing technology in sprinkler bracket systems, developments are made, therefore new configurations are required in order to eliminate abovementioned disadvantages and bring solution to current systems.

### Aim of the Invention

The invention is related to the sprinkler bracket systems which is different from the structures used in the state of the art, is developed to solve said disadvantages and brings some additional advantages.

The aim of the invention is to locate the sprinkler sleeve with the clamp system into the sleeve housing from the side portion in an easy manner. Therefore, the assembly labour is reduced.

Another aim of the invention is to prevent unintentional opening of the locking bar used in locking the upper clamp and the lower clamp by means of the developed handle lock. In this manner, a perfect locking will be performed despite the negative environmental conditions.

Another aim of the invention is to increase the surface area where the clamp and the sleeve contacts by adding concave holder nails to the lower and upper clamps. Therefore, the sprinkler sleeve is provided to be kept fixed by increasing the surface friction of the sleeve and the apparatus.

The structural and characteristic features of the present invention will be understood clearly by the following drawings and the detailed description made with reference to these drawings. Therefore, the evaluation shall be made by taking these figures and the detailed description into consideration.

### Figures Clarifying the Invention

Figure - 1 is a perspective view of the inventive sprinkler bracket in a condition where the clamps are opened.
Figure - 2 is a perspective view of the inventive sprinkler bracket in a condition before the profile and sleeve are connected.
Figure - 3 is a perspective view of the inventive sprinkler bracket where it is in a closed position alone.

### Description of the Part References

1. Sprinkler bracket
10. Lower clamp
11. Profile housing
20. Upper clamp
21. Locking bar housing
30. Locking bar
31. Handle
32. Bar segment
33. Handle lock
40. Fastening element
50. Sleeve housing
51. Clamp sleeve gaps
52. Lower clamp holder nails
53. Upper clamp holder nails
P. Profile
S. Sprinkler sleeve

### Detailed Description the Invention

### Structure principle;

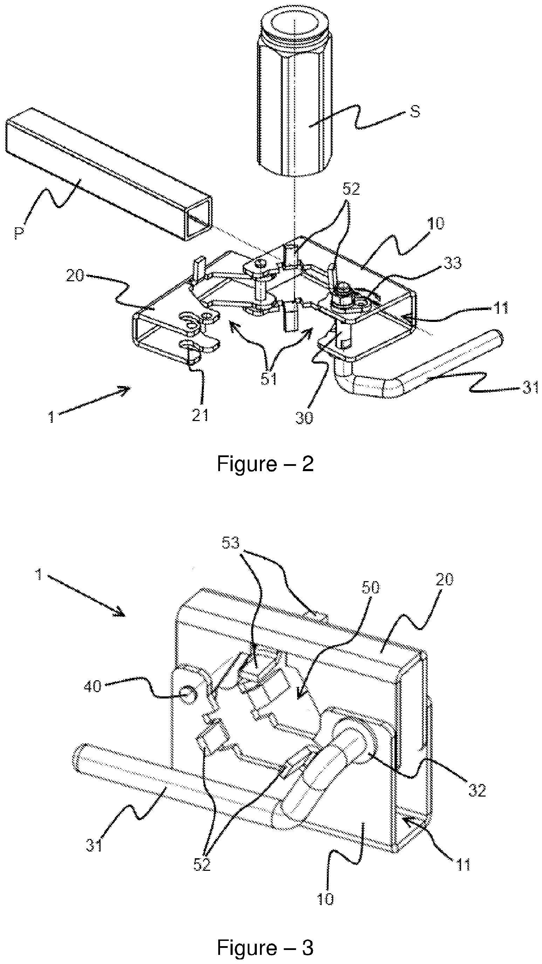

Said sprinkler bracket (1) consists of two main parts namely the lower clamp (10) and the upper clamp (20). The lower clamp (10) is a clamp group which enables the profile (P) and the sprinkler sleeve (S) to be fixed and remain together. The upper clamp (20) is the clamp group which is closed on the lower clamp (10) and locks the sprinkler sleeve (S) inside. Figure 2 is a perspective view of the lower clamp (10) and the upper clamp (20) in which they are coupled with each other and are in an open manner.

In the inner portion of said lower clamp (10), there is a profile housing (11) where the sprinkler profile (S) will pass through.

After the assembly of the lower clamp (10) and the upper clamp (20) to each other, a sleeve housing (50) is formed in the middle portion. Said sleeve housing (50) is formed such that the clamp sleeve gaps (51) come face to face with each other which is formed inwardly in the middle portions of the lower clamp (10) and the upper clamp (20).

In order to firmly fix the sprinkler sleeve (S) into the sleeve housing (50) formed between the lower clamp (10) and the upper clamp (20), there are lower clamp holder nails (52) which are in the clamp sleeve gaps (51) of the lower clamp (10), have a concave structure facing outwards and are formed on both sides. The sprinkler sleeve is compressed into the sleeve housing (50) by the lower clamp nails and the upper clamp nails. With the same aim, the upper clamp holder nails (53) are formed on the upper clamp (20).

The connection of the lower clamp (10) and the upper clamp (20) with each other is performed by two elements from two different points. These elements are the locking bar (30) and the fastening element (40). The fastening element (40) fixes two parts to each other and rotating process is performed by taking this point as the center.

The locking bar (30) is the elements which enable the upper clamp (20) to be fixed after it is closed on the lower clamp (10). The handle (31) is formed by sloping the extension of the locking bar (30) outside the lower clamp (10). The handle (31) is the portion which helps rotating the locking bar (30) around its axis by 90 degrees in order to perform the locking process. In the portions where said locking bar (30) contacts to the lower clamp (10), a handle lock (33) which helps locking process after rotation and a bar segment (32) are found.

During the upper clamp (20) is fitted on the lower clamp (10), a locking bar housing (21) is formed on the end portion of the upper clamp (20) such that it fits in the locking bar (30).

### Assembly and Working Principle;

Particularly, the profile (P) to be formed on the ceiling where the sprinkler hose will be attached, is fitted into the profile housing (11) located on the lower clamp (10). Subsequently, the lower clamp (10) and the upper clamp (20) are fixed to each other by the fastening element (40). A durable connection is performed by compressing the profile (P) with the lower clamp (10) via fixing. This fixation point allows for rotating the upper clamp (20) while this fixation points serves as a hinge.

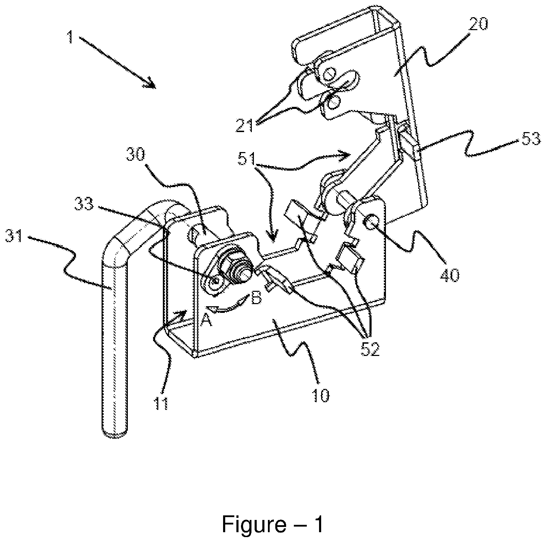

The sprinkler sleeve (S) located on the end portion of the sprinkler hose is located in the sleeve housing (50) of the sprinkler bracket (1) which is in the position in Figure 2 in a perpendicular manner. After positioning, the upper clamp (20) rotates the fastening element (40) by taking the sleeve and is closed in the lower clamp (10). The sprinkler sleeve (S) when it is closed is compressed into the sleeve housing (50) by the lower clamp nails (52) and the upper clamp nails (53) which are clearly seen in Figures 1 and 2.

During said closing process, the locking bar housing (21) formed on the upper clamp (20) fits into the locking bar (30) and the connection takes place. The perspective view of the clamps in a closed condition is seen in Figure 3. The handle (31) which is the external portion of the locking bar (30) is perpendicular to the profile (P) as can be seen in Figure 1. When the handle (31) is perpendicular to the profile (P), complete locking is not performed. The handle (31) is locked by means of rotating such that it is parallel to the profile (P). Then locking is performed by turning the handle lock (33) in direction A.

When the system is required to be disassembled, the first lock is opened by means of rotating the handle lock (33) in B direction. Subsequently, the handle (31) is rotated by 90 degrees and is brought perpendicular to the profile (P) and the lock is opened. Moreover, the upper clamp (20) is pulled upwardly in a manual manner and the locking bar housing (21) is saved from the locking bar (30). The sprinkler sleeve (S) is removed by means of pulling laterally from the sleeve housing (50).

## Claims

1. A sprinkler bracket (1) which has a lower clamp (10) through which the profile (P) where the sprinkler system will be mounted is passed; an upper clamp (20) which corresponds to the lower clamp by means of connecting with said lower clamp (10) and enables locking the sprinkler sleeve (S); a sleeve housing (50) in which said sprinkler sleeve (S) is placed and locked; a locking bar (30) which enables locking of said lower clamp (10) and the upper clamp (20) after they are fitted on each other and is attached to the lower clamp (10), **characterized by comprising;**
• a handle lock (33) which enables the locking bar (30) to remain stable after locking process, is attached to the portion protruding outwardly from the lower clamp (10) of the locking bar (30) and enables easy opening and closing by allowing for the external intervention,
• a handle (31) which is formed by sloping the extension of the locking bar (30) outside the lower clamp (10) and helps rotating the locking bar (30) around its axis by 90 degrees in order to perform the locking process,
• a fastening element (40) which fixes the lower clamp (10) and the upper clamp (20) wherein the upper clamp (20) rotates the fastening element (40) by taking the sleeve and is closed in the lower clamp (10).

2. A sprinkler bracket (1) according to claim 1, **characterized by comprising;** the lower clamp (10) comprises lower clamp holder nails (52) which are formed on the front and rear sides in a perpendicular protrusion form to the side portions of the clamp sleeve gaps (51) and enables the sprinkler sleeve (S) to be firmly locked.

3. A sprinkler bracket (1) according to claim 1, **characterized by comprising;** the upper clamp (10) comprises upper clamp holder nails (53) which are formed on the front and rear sides in a perpendicular protrusion form to the side portions of the clamp sleeve gaps (51) and enables the sprinkler sleeve (S) to be firmly locked.

## Patentansprüche

1. Sprinklerbügel (1), der eine untere Klemme (10) aufweist, durch die das Profil (P), an dem die Sprinkleranlage montiert wird, geführt ist; eine obere Klemme (20), die ein Gegenstück zu der unteren Klemme mittels Verbinden mit der unteren Klemme (10) darstellt und ein Verriegeln der Sprinklerhülse (S) ermöglicht, ein Hülsengehäuse (50), in dem die Sprinklerhülse (S) platziert und verriegelt ist; eine Verriegelungsstange (30), die ein Verriegeln der unteren Klemme (10) und der oberen Klemme (20) ermöglicht, nachdem sie aneinander angebaut sind, und die an der unteren Klemme (10) angebracht ist, **dadurch gekennzeichnet, dass** er Folgendes umfasst:
• eine Griffsperre (33), die es ermöglicht, dass die Verriegelungsstange (30) nach dem Verriegelungsvorgang stabil bleibt, an dem nach außen aus der unteren Klemme (10) herausragenden Abschnitt der Verriegelungsstange (30) angebracht ist und ein einfaches Öffnen und Schließen ermöglicht, indem sie den Eingriff von außen zulässt,
• einen Griff (31), der durch Abschrägen der Verlängerung der Verriegelungsstange (30) außerhalb der unteren Klemme (10) gebildet wird und dabei hilft, die Verriegelungsstange (30) um 90 Grad um ihre Achse zu drehen, um den Verriegelungsvorgang durchzuführen,
• ein Befestigungselement (40), das die untere Klemme (10) und die obere Klemme (20) fixiert, wobei die obere Klemme (20) das Befestigungselement (40) durch Mitnehmen der Hülse dreht und es in der unteren Klemme (10) eingeschlossen ist.

2. Sprinklerbügel (1) nach Anspruch 1, **dadurch gekennzeichnet, dass** er Folgendes umfasst; die untere Klemme (10) umfasst untere Klemmenhalternägel (52), die an der Vorder- und der Rückseite in einer senkrechten Vorsprungsform zu den Seitenabschnitten der Klemmenhülsenspalten (51) ausgebildet sind, und ermöglicht es, dass die Sprinklerhülse (S) fest verriegelt wird.

3. Sprinklerbügel (1) nach Anspruch 1, **dadurch gekennzeichnet, dass** er Folgendes umfasst; die obere Klemme (10) umfasst obere Klemmenhalternägel (53), die an der Vorder- und der Rückseite in einer senkrechten Vorsprungsform zu den Seitenabschnitten der Klemmenhülsenspalten (51) ausgebildet sind, und ermöglicht es, dass die Sprinklerhülse (S) fest verriegelt wird.

## Revendications

1. Support d'extincteur (1) qui comporte un dispositif de serrage inférieur (10) à travers lequel passe le profilé (P) sur lequel le système d'extincteur sera monté ; un dispositif de serrage supérieur (20) qui correspond au dispositif de serrage inférieur par liaison avec ledit dispositif de serrage inférieur (10) et permet le verrouillage du manchon d'extincteur (S) ; un boîtier de manchon (50) dans lequel ledit manchon d'extincteur (S) est placé et verrouillé ; une barre de verrouillage (30) qui permet le verrouillage dudit dispositif de serrage inférieur (10) et dudit dispositif de serrage supérieur (20) après leur ajustement l'un sur l'autre et qui est fixée au dispositif de serrage inférieur (10), **caractérisé en ce qu'il comprend** :
• un verrou de poignée (33) qui permet à la barre de verrouillage (30) de rester stable après le processus de verrouillage, est fixé à la partie dépassant vers l'extérieur du dispositif de serrage inférieur (10) de la barre de verrouillage (30) et permet une ouverture et une fermeture aisées en permettant l'intervention extérieure,
• une poignée (31) qui est formée en inclinant l'extension de la barre de verrouillage (30) à l'extérieur du dispositif de serrage inférieur (10) et aide à faire tourner la barre de verrouillage (30) autour de son axe à 90 degrés afin d'effectuer le processus de verrouillage,
• un élément de fixation (40) qui fixe le dispositif de serrage inférieur (10) et le dispositif de serrage supérieur (20) dans lequel le dispositif de serrage supérieur (20) fait tourner l'élément de fixation (40) en attrapant le manchon et se ferme dans le dispositif de serrage inférieur (10).

2. Support d'extincteur (1) selon la revendication 1, **caractérisé en ce qu'il comprend** : le dispositif de serrage inférieur (10) comprend des clous de support de dispositif de serrage inférieur (52) qui sont formés sur les côtés avant et arrière sous forme de saillie perpendiculaire aux parties latérales des espaces du manchon de serrage (51) et permet au manchon d'extincteur (S) d'être fermement verrouillé.

3. Support d'extincteur (1) selon la revendication 1, **caractérisé en ce qu'il comprend** : le dispositif de serrage supérieur (10) comprend des clous de support de dispositif de serrage supérieur (53) qui sont formés sur les côtés avant et arrière sous forme de saillie perpendiculaire aux parties latérales des espaces du manchon de serrage (51) et permet au manchon d'extincteur (S) d'être fermement verrouillé.
